# EUROPEAN PATENT SPECIFICATION

(11) **EP 3 006 413 B1**
(45) Date of publication and mention of the grant of the patent: **02.08.2017**
(21) Application number: 15189248.6
(22) Date of filing: 09.10.2015
(51) Int. Cl.: C03B 33/04, C03B 33/07, C03B 33/033

(54) **METHOD FOR CUTTING A LAMINATED SHEET OF GLASS**
VERFAHREN ZUM SCHNEIDEN EINER LAMINIERTEN GLASSCHEIBE
PROCÉDÉ DE DÉCOUPE D'UNE PLAQUE DE VERRE FEUILLETÉ

(30) Priority: 10.10.2014 IT TO20140816
(43) Date of publication of application: 13.04.2016
(73) Proprietor: Bottero S.p.A., 12100 Cuneo (IT)
(72) Inventor: GHINAMO, Leonardo, 12100 Cuneo (IT); OLOCCO, Guido, 12012 Boves (IT); OSTORERO, Marcello, 12010 Vignolo (IT); VIGLIETTI, Davide, 12080 Pianfei (IT); FERRARI, Simone, 12100 Cuneo (IT)
(74) Representative: Boggio, Luigi

(56) References cited:
- EP-A1- 2 177 482
- EP-A2- 1 323 681
- US-A1- 2008 236 199

## Description

The present invention relates to a method for cutting a laminated sheet of glass.

In order to cut a laminated sheet of glass, i.e., one comprising two outer sheets of glass and an intermediate layer of thermoplastic material, generally known as PVB, it is known to make on both of the sheets of glass a scribe line parallel to a desired cutting line and mechanically bend in succession the sheets of glass until they break along the respective scribe lines, thus obtaining two pieces of sheet joined together by the layer of thermoplastic material.

According to a different operating mode, breaking of the sheets of glass by mechanical bending is replaced by thermal cutting, which is obtained by heating just the sheets of glass locally, and as little as possible the intermediate layer, about the cutting line until a high temperature gradient is generated on the sheets of glass themselves, which causes breaking of the sheets of glass.

Irrespective of how breaking of the sheets of glass is obtained, cutting of the laminated sheet of glass then normally comprises a step of heating of the intermediate layer of thermoplastic material in order to bring the intermediate thermoplastic layer itself into a softening condition, which enables axial distancing of the two pieces of sheet of glass and subsequent cutting of the intermediate layer of thermoplastic material. In particular, EP2177482A1 corresponds to the preamble of claim 1 and teaches to cut the intermediate layer by localized heating.

In the case of breaking of the sheets of glass by mechanical bending, heating of the thermoplastic layer is carried out following upon splitting of the sheets of glass. In the case, instead, of thermal cutting, partial heating of the intermediate layer takes place naturally during heating of the sheets of glass, and following upon breaking of the sheets of glass it may become necessary or not to carry out further heating according to the yielding that the intermediate layer presents.

According to a different implementation, the layer of thermoplastic material is heated sharply or overheated until it is brought into a condition of crystallisation that renders it brittle and hence easy to break so that the intermediate layer breaks spontaneously as do the sheets of glass or else into a condition of sublimation in which the thermoplastic material passes directly into the gaseous state. At this point the sheets of glass may be cut mechanically and/or by thermal stress.

The known cutting modes described above are far from satisfactory for the reasons outlined hereinafter.

In the case of mechanical breaking it is necessary to have available relatively complex machines and, in any case, ones provided with devices for bending sheets of glass that have a high geometrical stability so as to be able to cut sheets of any thickness.

Heating of the thermoplastic material after breaking of the sheets requires a high control of temperature in order to prevent any burns and/or loss of adhesion of the thermoplastic material following upon distancing of the two pieces.

In the case of thermal cutting, splintering is frequently generated with consequent formation of ragged edges on the pieces obtained or spontaneous cracks in the sheets of glass that advance in an uncontrolled way along lines of breaking that are different from one another in the two sheets and different from the cutting line envisaged.

In the case, instead, where the intermediate layer of thermoplastic material is brought into the condition of crystallisation or sublimation, noxious gases are inevitably generated, which spread into the environment.

The aim of the present invention is to provide a different method for cutting laminated sheets of glass that will be simple and inexpensive to implement and at the same time will be reliable irrespective of the thickness of the sheets of glass and of the layer of thermoplastic material and irrespective of the desired pattern of the cutting line.

According to the present invention, a method for cutting a laminated sheet of glass is provided as specified in Claim 1.

The invention will now be described with reference to the annexed drawings, which illustrate a non-limiting example of embodiment thereof and in which:
Figure 1 is a schematic representation, basically in the form of blocks, of a preferred embodiment of a cutting machine for implementing the cutting method according to the present invention;
Figure 2 illustrates at a markedly enlarged scale a variant of a detail of Figure 1;
Figures 3 to 5 are, respectively, a perspective view, a front view, and a top plan view of a sheet that is being cut according to the method of the present invention in a condition where it is about to break as a result of the increase in volume of an intermediate portion of the sheet itself;
Figure 6 is similar to Figure 1 and illustrates a different cutting machine for implementation of the method according to the present invention; and
Figure 7 illustrates the temperature variation in a laminated sheet that has not been scored and is cut according to the teachings of the present invention.

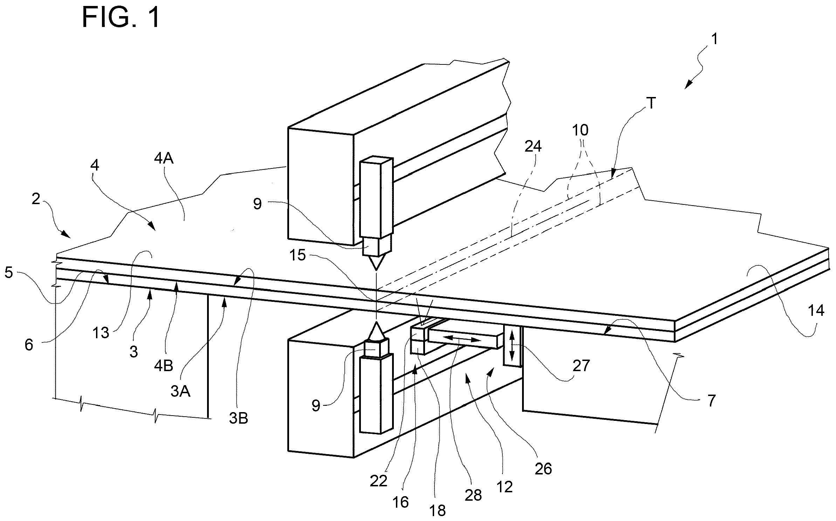

In Figure 1, designated as a whole by 1 is a machine for cutting a laminated sheet 2 of glass along a predefined cutting line T, which in the specific case is rectilinear. The sheet 2 comprises two outer sheets of glass, designated by 3 and 4, and an intermediate layer 5 of sheet thermoplastic material, commonly known as PVB layer.

The machine 1 comprises two resting surfaces 6 and 7 set at a distance from one another, laid on each of which is a respective portion of the sheet 2 and, for each sheet 3, 4 of glass, a respective motor-driven scoring head 9, in itself known and not described in detail, for making, where necessary and as will be outlined in greater detail in what follows, a scribe line 10 parallel to the cutting line T on the outer surfaces 3A, 4A of the sheets of glass 3, 4.

The machine 1 then comprises a device 12 for thermal cutting of the sheets of glass 3, 4. The device 12 is designed to cause bending of both of the sheets 3, 4 and breaking thereof along the cutting line T. Following upon breaking, the sheet is divided into two pieces of sheet 13 and 14 joined together by an elongate and continuous intermediate portion 15 of the layer 5 of thermoplastic material, which, prior to breaking of the sheets of glass, extends along the cutting line T straddling the cutting line T itself.

With reference to Figure 1, the cutting device 12 comprises just one source of heat 16 set, in the specific case, adjacent to the sheet 3 of glass.

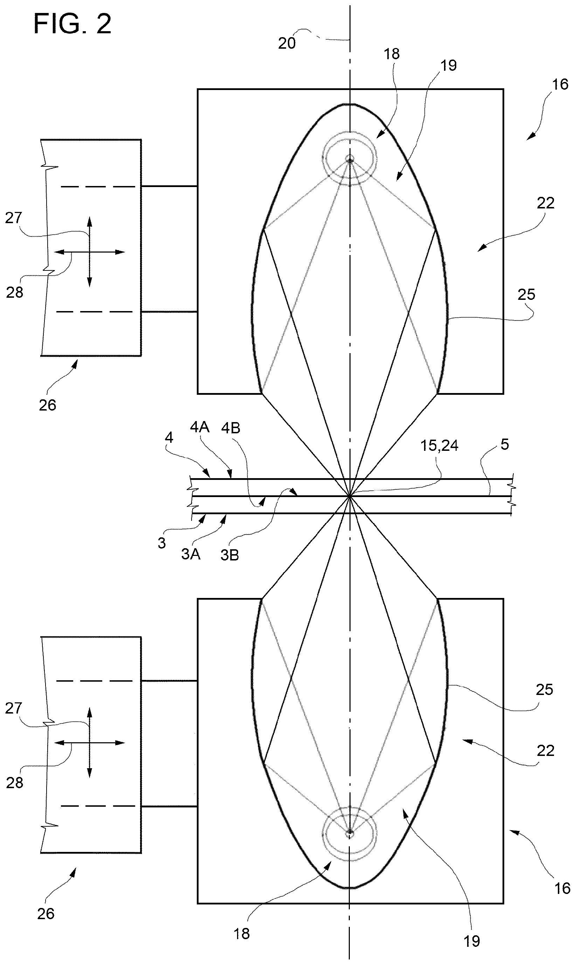

According to a variant, the device 12 comprises two sources of heat 16 set on opposite sides of the sheet 2, as indicated in Figure 2.

Each source of heat 16 is conveniently mobile between a retracted resting position and an advanced heating position, in which it extends practically in a position corresponding to the cutting line T so as to heat the elongate intermediate portion 15.

Conveniently, each source of heat 16 extends in a direction that, in top plan view, is parallel to the cutting line T and preferably extends throughout the width of the resting surfaces 6 and 7, and hence always from one side to the other of any laminated sheet 2 to be cut laid on said resting surfaces 6 and 7. Each source of heat 16 comprises a single incandescent lamp 18 and is designed to emit, in use, in the direction of the intermediate portion 15, a diverging heating beam 19 of its own having a continuous spectrum and a wavelength ranging, for example, from 0.3 to 3 µm.

Alternatively, according to a different embodiment, each source of heat 16 comprises two or more lamps 18 set aligned to one another along the cutting line T so as to cover the entire width of the resting surfaces 6 and 7 and, possibly, project beyond the resting surfaces 6 and 7 themselves.

As a result of what has been said previously, the beams 19 extend, in use, throughout the length of the cutting line T so as to heat simultaneously all points of the elongate portion 15. Each beam 19 has an optical plane 20 of its own (Figure 2), which extends orthogonal to the surfaces 3A and 4A and lying in which is the cutting line T. In this way, the optical plane 20 intersects the entire elongate portion 15.

Once again with reference to Figures 1 and 2, each source of heat 16 further comprises, for each lamp 18 a respective device 22 for focusing the heating beam emitted by the corresponding lamp 18. Conveniently, each device 22 is fixedly connected to the respective lamp 18 so as to focus the heating beam only on the elongate portion 15. Conveniently, the device 22 focuses the heating beam along an elongate focusing line 24 intersecting the entire elongate portion 15. Conveniently, moreover, the line 24 lies in the plane 20.

Each focusing device 22 hence provides, in use, a respective thermal blade that terminates with the aforesaid elongate focusing line 24 so as to bring the entire portion 15 to the same temperature at the same time. In this way, the portion 15 is uniformly heated throughout its length and consequently exerts, on the sheets, a distributed and constant action throughout the cutting line T, which leads the sheets of glass 3, 4 to break instantaneously.

Each focusing device 22 comprises a reflecting body 25 of its own, conveniently having at least one elliptical or parabolic portion. Alternatively, one or both of the devices 22 comprises/comprise lens focusing assemblies.

Finally, the cutting device 12 comprises a positioning device 26, schematically illustrated in the attached figures, having the purpose of translating the source or sources 16 from and towards the sheet 2 in a direction 27 orthogonal to the sheet 2 and translating it or them parallel to the surfaces 6 and 7 in a direction 28 in order to heat more the elongate portion 15 straddling the cutting line T and less the sheets 3, 4 of glass.

Positioning of the source or sources 16 must be such as to render minimum heating of the sheets 3, 4 of glass so as to prevent breaking of the sheets of glass as a result of the temperature gradient to which the sheets 3, 4 of glass are subjected.

The sheet 2 laid down on the resting surfaces 6, 7 is cut along the cutting line T as described in what follows. According to a preferred cutting mode, the sheets 3, 4 of glass are preliminarily scored in a known way to obtain a line 10 on each sheet of glass 3, 4.

According to a different cutting mode, the scribe lines 10 are not made, and on each sheet 3, 4 of glass one or more scores are, instead, made to initiate breaking.

According to a further cutting mode, the sheets 3, 4 of glass not are preliminarily scored. Breaking occurs in total absence of any mechanical action on the sheets 3, 4 of glass.

The choice of the cutting mode depends upon a wide range of factors such as, for example, the thickness of the sheets of glass and of the intermediate layer 5 in cold conditions or the length of the cutting line T.

In any case, each source of heat 16 is displaced into its advanced heating position, and its distance from the resting surfaces 6, 7 and its position with respect to the cutting line T is adjusted according to the thickness of the sheets 3, 4 of glass and of the intermediate layer 5. As has been said previously, each source of heat 16 is advanced or retracted with respect to the resting surfaces 6, 7 so as to direct the maximum amount possible of the thermal energy emitted by each source 16 onto the intermediate portion 15 and so as to minimize heating of the sheets 3, 4 of glass.

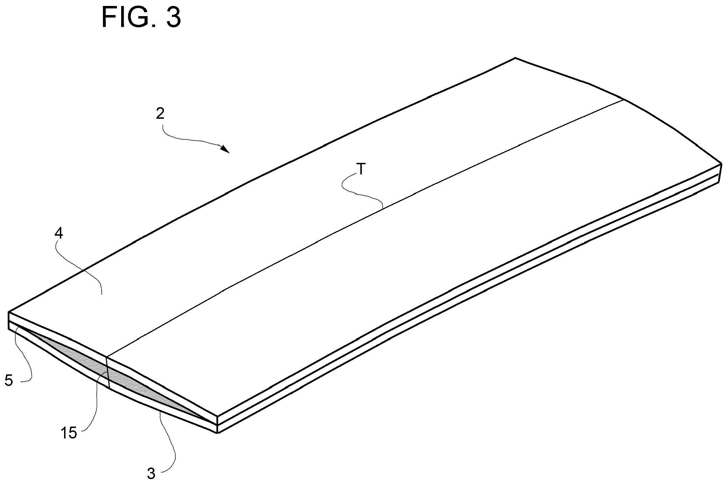

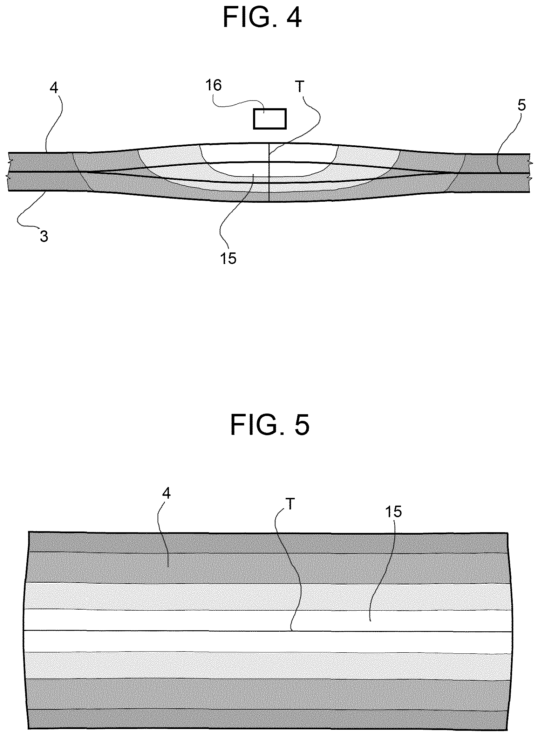

At this point, each source 16 is activated and kept on for a time such as to cause first softening of the intermediate portion 15 and then a progressive and simultaneous swelling of the entire intermediate portion 15. As illustrated in Figures 3, 4, and 5, with respect to an undeformed cold condition (Figures 1 and 2), where the intermediate layer 5 has a constant thickness, swelling of the intermediate portion 15 generates directly on the inner surfaces 3B and 4B of the sheets 3, 4 of glass set in contact with the intermediate layer 5 an increasing thrust distributed along the cutting line T. The above thrusts, which are practically orthogonal to the sheets 3, 4 of glass, cause a progressive bending of the sheets, as is clearly visible from Figures 3-5, and spontaneous breaking of the sheets 3, 4 of glass themselves along the cutting line T and along the scribe lines 10 or starting from the initiating points, when present.

Experimentally it has been found that the two sheets 3, 4 of glass in some cases break at the same time, and in other cases break one after the other. In the latter case, the sheet 3 breaks first.

Reaching of the necessary condition of swelling and consequent breaking of the sheets 3, 4 of glass depends upon various factors such as the thickness of the sheets 3, 4 of glass, the thickness of the intermediate layer 5, the power and/or geometry of the heat source or sources 16, the heating time, and the heating rate.

Experimentally it has been found that different sheets 2 reach a condition of spontaneous breaking when the temperature of the intermediate portion is made to vary between 60°C and 80°C; in some cases said temperature reaches approximately 90°C.

For example, starting from a laminated sheet 2 at room temperature that has sheets of glass 3, 4 of a thickness of 3 mm and the intermediate layer 5, and hence an intermediate portion 15, of a thickness of 0.38 mm, by using a single 4-W/mm source of heat, softening starts after a pre-heating time of approximately 2 s, and breaking of both of the sheets occurs after a time of approximately 40 s.

A person skilled in the sector may easily determine the temperature necessary to obtain a sufficient degree of swelling, it being known that the expansion curve of the thermoplastic material (PVB), in a temperature range between 60°C and 90°C, is practically linear with the temperature and that the expansion coefficient of the thermoplastic material (PBV) normally used is approximately 1.4 · 10⁻⁴ per degree centigrade.

Knowing, then, the power of the lamp or lamps 18 used, and the degree of focusing of the beam on the elongate portion 15, a person skilled in the sector may, with a contained number of simple attempts, dose heating of the portion 15 until spontaneous breaking of the sheets 3, 4 of glass is obtained. On the basis of the appearance of the breaking zones, the operator may then decide whether to make preliminary incisions in the sheets 3, 4 or just make the initiating scores or not carry out any machining at all on the sheet prior to heating.

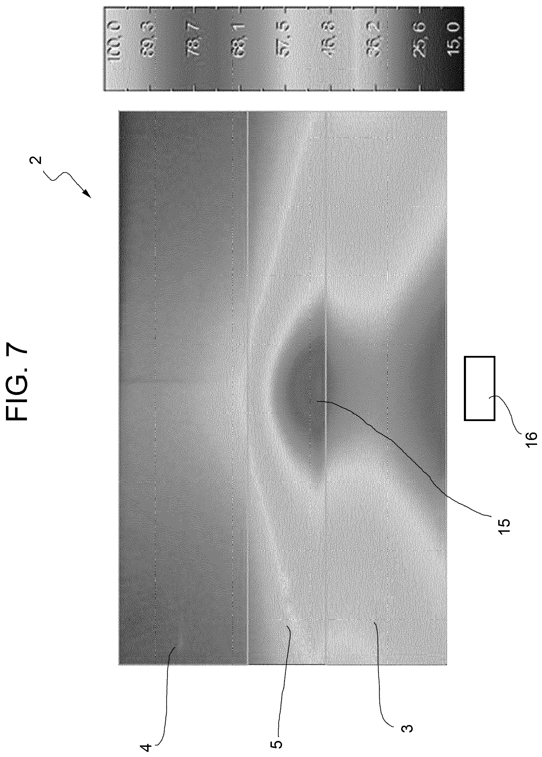

By way of example, Figure 7 illustrates the temperature variation detected practically at the moment of spontaneous breaking of a laminated sheet 2, which has sheets of glass 3, 4 of a thickness of 8 mm and an intermediate layer 5 of a thickness of 4.56 mm. Cutting is obtained with a single source 16 facing the sheet 3 and focused on the intermediate portion 15 and in the absence of incisions or break initiating points on the sheets 3, 4 of glass.

As may be immediately appreciated, when the temperature of the portion 15 reaches a maximum value of approximately 80-85°C, in the focusing point (point K in Figure 7), the temperature of the sheet 4 of glass remains practically room temperature, around 40°C, the sheet 4 does not undergo heating. The sheet 3 inevitably heats up, but its maximum temperature does not exceed 70°C - 75°C, hence remaining below the maximum temperature of the intermediate portion 15.

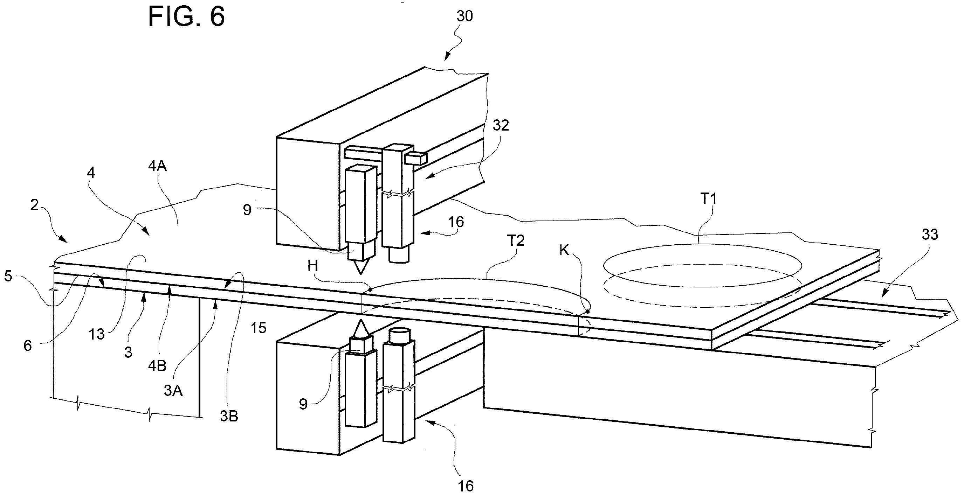

Figure 6 illustrates a cutting machine 30, which differs from the machine 1 as regards some constructional details and the constituent parts of which are designated, where possible, by the same reference numbers as those used for the corresponding parts of the machine 1.

The machine 30 differs from the machine 1 in that each source 16 has a shorter length, for example 20 mm, or else, instead of being rectilinear, has an annular shape or a U shape. In addition, according to a variant, the source or sources 16 of the machine 30 are laser sources.

Whatever the type of source or sources 16 mounted in the machine 30, said source or sources 16 are carried, in a way in itself known, by respective motor-driven movement heads 32, just one of which is visible in Figure 6.

According to a variant, the machine 30 comprises a single motor-driven head 32.

The presence of the movement heads 32 in conjunction with a device 33 (in itself known and not described in detail) for displacement of the sheet 2 on the resting surfaces 6, 7 makes it possible to cut the sheet 2 not only along rectilinear cutting lines, as in the machine 1, but along cutting lines having any open or closed shape, two of which are designated by T1 and T2.

In the machine 30, breaking of the sheets 3, 4 of glass is obtained by displacing the source or sources 16 along the cutting line envisaged at a constant speed or with reciprocating motion, according to the type of cutting line, until spontaneous breaking of the sheets 3, 4 of glass is obtained exactly as described previously.

By way of example, starting from a sheet 2 at room temperature that has sheets 3, 4 of glass of a thickness of 5 mm and a layer 5 of PVB of a thickness of 1.52 mm along a cutting line defined by a circle of a diameter of 280 mm and using a 6000-W source having a length of 200 mm focused in a point or in an area of the elongate portion 15, the source or sources 16 are made to advance along the cutting line at a constant speed ranging between 40 mm/s and 160 mm/s until the temperature of the intermediate portion is brought to a value of approximately 75°C - 85°C. In these conditions, breaking of the sheets 3, 4 of glass occurs after approximately 20 passes and/or after a time of 110 ± 10 s.

As the speed decreases, it is necessary to reduce proportionally the number of passes. Experimentally it has been found that splitting is obtained with 20 passes at 160 mm/s, or else with 5 passes at 40 mm/s. Experimentally it has moreover been noted that the quality of the cut generally improves as the speed increases.

As a further example, if the aim is to cut a sheet 2 once again at room temperature, with the sheets 3, 4 of glass having a thickness of 3 mm and the intermediate layer 5 having a thickness of 0.38 mm along a cutting line defined by an arc of a circle of radius 1030 mm and a distance between the end points of the arc denoted by H and K in Figure 6 using a single 6000-W source with a length of 200 mm focused in a point or in an area of the elongate portion 15, the source 16 must be made to advance at a speed ranging between 40 and 160 mm/s. In these conditions breaking of the sheets 3, 4 of glass occurs after approximately 15 passes and after a time of 120 ± 10 s. In these conditions, the temperature of the intermediate portion 15 is approximately 70°C.

Also with this heating mode, it is evident that even slight variations of the speed or of the degree of focusing may lead to slight variations of the degree of swelling and hence of the breaking times.

In all cases, following upon breaking of the sheets 3, 4 of glass, the elongate portion 15 is cut in a way in itself known.

In this regard, it is pointed out how, during heating, the intermediate portion 15 is trapped between the sheets and the remaining part of the intermediate layer and here no emission of gases towards the external environment can occur.

From the above description it is evident how breaking of the sheets 3, 4 of glass takes place spontaneously and only under the thrust exerted from inside following upon expansion of the intermediate thermoplastic material trapped between the two sheets 3, 4 of glass.

However, external mechanical actions of bending of the sheet or of initiation or completion of breaking of the sheet 3, 4 of glass may be imparted in order to speed up the cutting process and/or improve the appearance of the break.

From the foregoing description it is moreover evident that swelling of the intermediate thermoplastic material may be obtained using heat sources 16 different from those indicated by way of example, but once again with the aim of breaking the sheets in the total absence of heating or cooling liquids or fluids interacting directly or indirectly with the sheets of glass.

## Claims

1. A method for cutting a laminated sheet of glass (2), which is made up of two outer sheets of glass (3,4) and an intermediate layer of thermoplastic material (5), along a predefined cutting line (T); the method comprising the steps of progressively bending the sheets of glass (3,4) until they break along said cutting line (T), heating an elongate portion (15) of said intermediate layer, that extends straddling said cutting line (T), and cutting said heated elongate portion (15) along said cutting line (T); the method being **characterized in that** bending and breaking of said sheets of glass (3,4) is carried out by exerting, on each sheet of glass (3,4), a thrust directly on the surface of the sheet of glass that is set in contact with said intermediate layer of thermoplastic material (5) and along said cutting line (T); said thrusts being opposed and being generated by a swelling of said elongate portion (15) with respect to an undeformed cold condition; said swelling being caused by heating said elongate portion (15).

2. The method according to Claim 1, **characterized in that** said swelling condition is obtained by heating said elongated portion (15) more than said sheets of glass (3,4).

3. The method according to Claim 1 or Claim 2, **characterized in that** said swelling condition is obtained by heating said elongate portion (15) to a temperature ranging from 60 to 80°C.

4. The method according to any one of the preceding claims, **characterized in that** breaking of both of said sheets of glass (3,4) is obtained while keeping one of the sheets of glass (3,4) substantially at room temperature.

5. The method according to any one of the preceding claims, **characterized in that** said sheets of glass (3,4) are broken simultaneously and instantaneously.

6. The method according to any one of the preceding claims, **characterized in that** breaking of said sheets of glass (3,4) is obtained by keeping at least one elongate source of heat (16) in a fixed heating position with respect to said laminated sheet (2) and to said cutting line (T), and by simultaneously heating all the points of said elongate portion (15) so as to bring about a simultaneous swelling of all the stretches of said elongate portion (15).

7. The method according to Claim 1 or Claim 2, **characterized in that** breaking of said sheets of glass (3,4) is obtained by setting at least one source of heat (16) along a stretch of said cutting line (T) and by moving said source of heat (16) along said cutting line (T) in just one direction or in both directions.

8. The method according to Claim 3 or Claim 4, **characterized in that** said swelling is obtained using a pair of sources of heat (16) set on opposite sides of said laminated sheet (2).

9. The method according to any one of the preceding claims, **characterized in that** said swelling is obtained by using at least one elongate incandescent source (18) and by focusing a beam emitted by said elongate incandescent source (18) on said elongate portion (15).

10. The method according to Claim 9, **characterized in that** said focusing comprises the steps of directing the beams emitted by said incandescent source (18) onto an elongate focusing line, the projection of which on the laminated sheet (2) is parallel to said cutting line (T) and is set on the surface of, or within, said elongate portion (15).

11. The method according to any one of the preceding claims, **characterized in that** it comprises the step of making at least one partial incision of said sheets of glass (3,4) along said cutting line (T) before said elongate portion (15) begins to swell.

12. The method according to any one of the preceding claims, **characterized in that** breaking of both of said sheets of glass (3,4) is obtained using a single source of heat (16) facing one of said sheets of glass (3,4).

## Patentansprüche

1. Verfahren zum Schneiden einer laminierten Glasscheibe (2), die aus zwei äußeren Glasscheiben (3,4) und einer Zwischenschicht aus thermoplastischen Material (5) gebildet ist, entlang einer vordefinierten Schneidlinie (T); wobei das Verfahren die Schritte aufweist: progressives Biegen der Glasscheiben (3,4), bis sie entlang der Schneidlinie (T) brechen, Heizen eines länglichen Abschnitts (15) der Zwischenschicht, der die Schneidlinie (T) umklammert, und Schneiden des geheizten länglichen Abschnitts (15) entlang der Schneidlinie (T); wobei das Verfahren **dadurch gekennzeichnet ist, dass** das Biegen und Brechen der Glasscheiben (3,4) ausgeführt wird, indem auf jede Glasscheibe (3,4) ein Stoß direkt auf denjenigen Oberflächenbereich der Glasscheibe ausgeübt wird, der in Kontakt mit der Zwischenschicht aus thermoplastischem Material (5) und entlang der Schneidlinie (T) angeordnet ist; wobei die Stöße in einander entgegengesetzten Richtungen erfolgen und durch ein Anschwellen des länglichen Abschnitts (15) relativ zu einem unverformten kalten Zustand erzeugt werden; wobei das Anschwellen durch Heizen des länglichen Abschnitts (15) bewirkt wird.

2. Verfahren nach Anspruch 1, **dadurch gekennzeichnet, dass** der Schwellzustand herbeigeführt wird, indem der längliche Abschnitt (15) mehr als die Glasscheiben (3,4) geheizt wird.

3. Verfahren nach Anspruch 1 oder Anspruch 2, **dadurch gekennzeichnet, dass** der Schwellzustand herbeigeführt wird, indem der längliche Abschnitt (15) auf eine Temperatur im Bereich von 60 bis 80° geheizt wird.

4. Verfahren nach einem der vorhergehenden Ansprüche, **dadurch gekennzeichnet, dass** das Brechen der beiden Glasscheiben (3,4) herbeigeführt wird, während eine der beiden Glasscheiben (3,4) im Wesentlichen auf Raumtemperatur gehalten wird.

5. Verfahren nach einem der vorhergehenden Ansprüche, **dadurch gekennzeichnet, dass** die Glasscheiben (3,4) gleichzeitig und augenblicklich gebrochen werden.

6. Verfahren nach einem der vorhergehenden Ansprüche, **dadurch gekennzeichnet, dass** das Brechen der beiden Glasscheiben (3,4) herbeigeführt wird, indem mindestens eine längliche Wärmequelle (16) in einer festen Heizposition relativ zu der laminierten Scheibe (2) und zu der Schneidlinie (T) gehalten wird, und indem sämtliche Punkte des länglichen Abschnitts (15) gleichzeitig geheizt werden, um ein gleichzeitiges Schwellen sämtlicher Bereiche des länglichen Abschnitts (15) herbeizuführen.

7. Verfahren nach Anspruch 1 oder Anspruch 2, **dadurch gekennzeichnet, dass** das Brechen der Glasscheiben (3,4) herbeigeführt wird, indem mindestens eine Wärmequelle (16) entlang eines Bereichs der Schneidlinie (T) platziert wird und indem die Wärmequelle (16) in nur einer Richtung oder in beiden Richtungen entlang der Schneidlinie (T) bewegt wird.

8. Verfahren nach Anspruch 3 oder Anspruch 4, **dadurch gekennzeichnet, dass** das Schwellen mittels eines Paars von Wärmequellen (16) herbeigeführt wird, die an einander gegenüberliegenden Seiten der laminierten Scheibe (2) platziert sind.

9. Verfahren nach einem der vorhergehenden Ansprüche, **dadurch gekennzeichnet, dass** das Schwellen mittels mindestens einer länglichen glühenden Quelle (18) und durch Fokussieren eines von der länglichen glühenden Quelle (18) emittierten Strahls auf den länglichen Abschnitt (15) herbeigeführt wird.

10. Verfahren nach Anspruch 9, **dadurch gekennzeichnet, dass** das Fokussieren einen Schritt aufweist, in dem die von der glühenden Quelle (18) emittierten Strahlen auf eine langgestreckte Fokussierlinie gerichtet werden, deren Projektion auf die laminierte Scheibe (2) parallel zu der Schneidlinie (T) verläuft und die auf der Oberfläche oder im Inneren des länglichen Abschnitt (15) platziert ist.

11. Verfahren nach einem der vorhergehenden Ansprüche, **gekennzeichnet durch** den Schritt des Durchführens mindestens einer teilweisen Inzision der Glasscheiben (3,4) entlang der Schneidlinie (T), bevor der längliche Abschnitt (15) zu schwellen beginnt.

12. Verfahren nach einem der vorhergehenden Ansprüche, **dadurch gekennzeichnet, dass** das Brechen der beiden Glasscheiben (3,4) mittels einer einzigen Wärmequelle (16) herbeigeführt wird, die einer der Glasscheiben (3,4) zugewandt ist.

## Revendications

1. Procédé pour couper une plaque de verre feuilleté (2), qui est constituée de deux plaques extérieures de verre (3, 4) et d'une couche intercalaire de matériau thermoplastique (5), le long d'une ligne de coupe prédéfinie (T) ; le procédé comprenant les étapes consistant à courber progressivement les plaques de verre (3, 4) jusqu'à ce qu'elles se brisent le long de ladite ligne de coupe (T), à chauffer une portion allongée (15) de ladite couche intercalaire, qui s'étend en recouvrant ladite ligne de coupe (T) et à couper ladite portion allongée chauffée (15) le long de ladite ligne de coupe (T) ; le procédé étant **caractérisé en ce que** la courbure et la rupture desdites plaques de verre (3, 4) est réalisée en exerçant, sur chacune des plaques de verre (3, 4), une poussée directement sur la surface de la plaque de verre qui est mise en contact avec ladite couche intercalaire de matériau thermoplastique (5) et le long de ladite ligne de coupe (T) ; lesdites poussées étant opposées et générées par un gonflement de ladite portion allongée (15) par rapport à une condition froide non déformée ; ledit gonflement étant causé par le chauffage de ladite portion allongée (15).

2. Procédé selon la revendication 1, **caractérisé en ce que** ladite condition de gonflement est obtenue en chauffant ladite portion allongée (15) davantage que les plaques de verre (3, 4).

3. Procédé selon la revendication 1 ou 2, **caractérisé en ce que** ladite condition de gonflement est obtenue en chauffant ladite portion allongée (15) à une température entre 60 et 80°C.

4. Procédé selon l'une quelconque des revendications précédentes, **caractérisé en ce que** la cassure desdites deux plaques de verre (3, 4) est obtenue tout en conservant une des plaques de verre (3, 4) sensiblement à température ambiante.

5. Procédé selon l'une quelconque des revendications précédentes, **caractérisé en ce que** lesdites plaques de verre (3, 4) sont brisées simultanément et instantanément.

6. Procédé selon l'une quelconque des revendications précédentes, **caractérisé en ce que** la rupture desdites plaques de verre (3, 4) est obtenue en maintenant au moins une source de chaleur allongée (16) dans une position de chauffage fixe par rapport à ladite plaque feuilletée (2) et à la ligne de coupe (T), et en chauffant simultanément tous les points de ladite portion allongée (15) de manière à réaliser un gonflement simultané de toutes les extensions de ladite portion allongée (15).

7. Procédé selon les revendications 1 ou 2, **caractérisé en ce que** la rupture desdites plaques de verre (3, 4) est obtenue en plaçant au moins une source de chaleur (16) le long d'une extension de ladite ligne de coupe (T) et en déplaçant ladite source de chaleur (16) le long de ladite ligne de coupe (T) selon une seule direction ou selon les deux directions.

8. Procédé selon les revendications 3 ou 4, **caractérisé en ce que** ledit gonflement est obtenu en utilisant une paire de sources de chaleur (16) disposées sur des côtés opposés de ladite plaque laminée (2).

9. Procédé selon l'une quelconque des revendications précédentes, **caractérisé en ce que** ledit gonflement est obtenu en utilisant au moins une source incandescente allongée (18) et en focalisant un rayon émis par ladite source incandescente allongée (18) sur ladite portion allongée (15).

10. Procédé selon la revendication 9, **caractérisé en ce que** ladite focalisation comprend les étapes consistant à diriger les rayons émis par ladite source incandescente (18) sur une ligne de focalisation allongée, à les projeter sur la plaque laminée (2) qui est parallèle à ladite ligne de coupe (T) et l'appliquer sur la surface ou à l'intérieur de ladite portion allongée (15).

11. Procédé selon l'une quelconque des revendications précédentes, **caractérisé en ce qu'**il comprend les étapes consistant à faire au moins une incision partielle dans lesdites plaques de verre (3, 4) le long de ladite ligne de coupe (T) avant d'amener ladite portion allongée (15) à gonfler.

12. Procédé selon l'une quelconque des revendications précédentes, **caractérisé en ce que** la rupture desdites deux plaques de verre (3, 4) est obtenue en utilisant une seule source de chaleur (16) disposée en face desdites plaques de verre (3, 4).
